Europäisches Patentamt

(19) **European Patent Office**

Office européen des brevets

(11) Publication number: **0 056 512**
**A1**

(12) # EUROPEAN PATENT APPLICATION

(21) Application number: **81304608.3**

(22) Date of filing: **05.10.81**

(51) Int. Cl.³: **B 01 D 13/04**
**C 02 F 1/44**

(30) Priority: **15.01.81 US 225348**

(43) Date of publication of application:
**28.07.82 Bulletin 82/30**

(84) Designated Contracting States:
**DE FR GB IT**

(71) Applicant: **BRUNSWICK CORPORATION**
**One Brunswick Plaza**
**Skokie Illinois 60077(US)**

(72) Inventor: **Wrasidlo, Wolfgang J.**
**1219 Coast Boulevard**
**La Jolla California 92037(US)**

(74) Representative: **Allden, Thomas Stanley et al,**
**A.A. THORNTON & CO. Northumberland House 303-306**
**High Holborn**
**London WC1V 7LE(GB)**

(54) **Reverse osmosis membrane and process for making the same.**

(57) A desirable reverse osmosis membrane which is particularly useful in water purification includes a thin, active layer (20) of a relatively inert, film forming, polymer which is capable of dissolving a limited amount of water, said active layer being used in association with a porous support (12). This active layer is disposed on a hydrogel layer (16) which serves to facilitate the movement of water away from the active layer generally toward the pores in the support. Preferably the support used is an asymmetric layer or membrane in which the porosity increases with the distance away from the hydrogel layer. The complete membrane can be manufactured through the use of solvent solutions which are successively applied to the support layer or membrane and from which the solvent is removed.

EP 0 056 512 A1

-1-

TITLE: REVERSE OSMOSIS MEMBRANE AND PROCESS FOR
MAKING THE SAME

BACKGROUND OF THE INVENTION

The invention set forth in this specification pertains to new and improved membranes which are primarily useful in the treatment of water by reverse osmosis but which are also capable of being utiliized in other applications. The invention set forth in this application also pertains to the manufacture of such membranes.

It is, of course, well known that in the purification of water by reverse osmosis that contaminated water is held under pressure against a membrane having characteristics such that purified water accumulates on the side of the membrane remote from the contaminated water. Many different reverse osmosis membranes have been proposed and have been used to various different extents in the purification of water. It is not considered that an understanding of this invention requires any sort of detailed discussion of the construction of such prior reverse osmosis membranes. It is considered, however, that an understanding of the present invention requires a reasonable understanding of the characteristics desired in a reverse osmosis membrane, and in particular, a reverse osmosis membrane designed for use in purifying water.

Such a membrane should be comparatively easy and inexpensive to manufacture. In addition, a satisfactory membrane of this type should be capable of withstanding the usual handling and storing prior to and during an installation in a reverse osmosis apparatus without physical damage or deterioration. Within such an apparatus a desirable or satisfactory reverse osmosis membrane must present as low a resistance to the movement or flow of water from one side or surface of the membrane to the other as reasonably possible and normally must be capable of passing a significant quantity of water. In addition, the membrane should be capable of withstanding the pressure normally applied to the treated water and the pressure differential across the membrane without detrimental affect on the flow characteristics through of the membrane.

Further, a satisfactory reverse osmosis membrane must be of such a character that it will not be affected as a result of any type of biodegradation and/or as a result of any sort of chemical reaction under the conditions or circumstances of use. The overall economics of a satisfactory reverse osmosis membrane for some uses require that the membrane be relatively satisfactory for use in removing contaminants such as common sodium chloride from water, but do not normally require that such a membrane be capable of removing substantially all of such a contaminant from water in most applications. In this connection it is noted that water having a limited salt content can be tolerated and used by many plants and animals.

SUMMARY OF THE INVENTION

Because it is felt that there is no known reverse osmosis membrane for use in the treatment of contaminated water which is completely satisfactory in accordance with all of the criteria indicated in the preceding discussion it follows that it is considered that there is a need for new and improved reverse osmosis membranes. Broadly the present invention is intended to fulfill this need by providing new and improved reverse osmosis membranes. Thus, the invention is intended to provide reverse osmosis membranes as indicated in the preceding discussion: which are comparatively easy and inexpensive to manufacture; which are not apt to be damaged as a result of the normal handling and storage prior to and during their installation; which exhibit comparatively limited resistance to the movement or flow of water; which are capable of withstanding the pressures normally encountered during their use; and which are not damaged by either biodegradation or chemical reaction in the usual or normal conditions or circumstances of their use.

In accordance with this invention these objectives are achieved by providing a reverse osmosis membrane, this membrane including an active layer and a physical support for the active layer, in which the improvement comprises: the active layer consisting essentially of a continuous, non-porous film of an organic, film-forming polymer composition which is substantially inert in the presence of an oxidizing agent having a sufficient oxidizing potential to serve as a sterilizing agent, which is from about 50 to about 1500 $^{\circ}$ A thick and which is capable of dissolving an amount of water equal to at least two percent by weight of the film.

As subsequently indicated a reverse osmosis membrane of the present invention is preferably much more complex than suggested by the preceding sentence. A reverse osmosis membrane of the present invention preferably utilizes as a support for the active layer an asymmetric layer or member of a relatively rigid or stiff character in which the porosity increases in accordance with the distance from a specific surface of the support layer or membrane. This surface of the support holds and is preferably bonded to a hydrogel layer serving several functions. It physically supports the active layer and in addition it serves to facilitate movement of water from the entire surface of the active layer to the pores in the support layer. This latter is beneficial in increasing the flow through the entire membrane.

This invention is also intended to provide a new and improved process for the manufacture of reverse osmosis membranes as are indicated in the preceding discussion. More specifically it is intended to provide a process as hereinafter indicated which may be easily and conveniently carried out at a comparatively nominal cost and which is especially desirable because of the physical characteristics of reverse osmosis membranes as are produced by this process.

In accordance with this invention those objectives indicated in the preceding discussion pertaining to a process are achieved by providing in a process for producing a reverse osmosis membrane in which an active layer capable of dissolving water is located on a surface of a porous support the improvement which comprises: applying to said surface of said porous support prior to the location of said active layer on said surface of said porous support a water containing solution of prepolymer chains capable of reacting so as to form an active layer, thereafter concurrently reducing the solvent content of said solution and reacting said prepolymer chains so as to form said active layer, the viscosity of said solution, the time and manner of said contact of said solution with said surface and the rate and conditions of said solvent removal being such that said active layer is formed on said surface of said support without penetration of said active layer into the pores of said support to an extent sufficient to significantly affect the ability of water to flow through said support.

The actual details of a process in accordance with this invention are also more complex or involved than indicated by the preceding sentence. The active layer is located on the hydrogel layer after the hydrogel layer is created. Preferably the hydrogel layer reacts with the support as it is created so as to be cross-linked with the support. Similarly, preferably the active layer is cross-linked to the hydrogel layer as it is created.

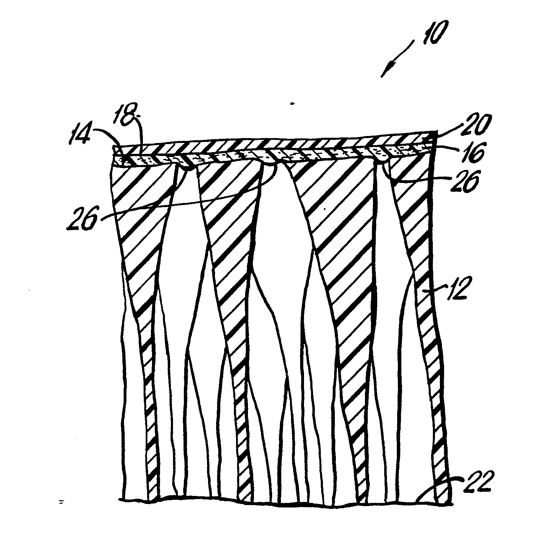

BRIEF DESCRIPTION OF THE DRAWING

Because of the nature of this invention it is considered that it is best more fully explained with reference to the accompanying drawing in which the figure is:

A diagrammatic, not to scale, cross-sectional type view showing the essential character of a presently preferred embodiment or form of a reverse osmosis membrane in accordance with this invention.

It is considered it will be obvious from a review of the drawing and of the preceding discussion that the invention set forth in this specification has a great many aspects and facets which are not indicated by or in the drawing. For this reason the invention is to be considered as being limited solely by the appended claims forming a part of this specification.

-6-

## DETAILED DESCRIPTION

In the drawing there is shown a reverse osmosis membrane 10 in accordance with this invention which includes a porous support 12 having a surface 14 supporting a hydrogel layer 16. This layer 16 has a further surface 18 remote from the support 12 which in turn carries and physically supports an active layer 20. If desired, the numeral 14 may be considered as designating the surface of the layer 16 adjacent to the support 12. Similarly, the numeral 18 may be considered as designating the surface of the layer 20 adjacent to the layer 16. The support 12 may be referred to as a support layer or member. The support 12 may be reinforced by another support (not shown) if this is desirable for mechanical reasons.

Within the broad concepts of the present invention the support 12 may be any sort of a porous member physically capable of supporting the two layers 16 and 20. Thus, the support 12 may consist of a layer or sheet of paper, a layer or sheet of a felted, woven, knitted fabric or a layer or sheet of a perforated material. It will of course be recognized that such layers or sheets are known and are capable of being utilized for mechanical filtration type purposes. Although any such layer or sheet can be used with this invention it is considered disadvantageous or undesirable to utilize any such layer or sheet because of considerations pertaining to fluid flow through such a layer or sheet.

The support 12 utilized in the reverse osmosis membrane of the present invention should preferably provide a minimum resistance to fluid flow from the surface 14 to another surface 22 to the support 12. Within limits it is possible to reduce the resistance to fluid flow through the support 12 by increasing the number of pores within the support 12 and by increasing the relative sizes or dimensions of these pores. When carried to an extreme expedients of this type are self-defeating in character since to be effective as a support the support 12 must contain sufficient material for the support 12 to be able to hold the layers 16 and 20 so that such layers 16 and 20 are not apt to become physically damaged.

Since such layers 16 and 20 must be as thin as reasonably possible in order to minimize their resistance to fluid flow it will be obvious that the pores in the support 12 must be relatively small in order to minimize the chances of damage to the layers 16 and 20 when the membrane 10 is subjected to a fluid pressure differential. Also, in order to minimize resistance to fluid flow these pores should be as "short" as possible. However, the lengths of the pores cannot be minimized to the point at which the support 12 becomes so weak that it is unable to exercise its supporting function.

As a result of these considerations it is considered desirable to utilize a support 12 having a physical character as indicated diagrammatically in the drawing. This support 12 is an asymmetric support in which the surface 14 is essentially in the nature of a film permeated by a multitude of small holes or pores 26. The material within the support 12 is "arranged" in a manner somewhat suggestive of the manner in which arches are utilized in many churches and similar buildings so that the surface 24 of the support 12 is essentially of an open character and only is intersected by sufficient material in post or pillar-like form so that the support 12 can adequately serve its function. Between the surfaces 14 and 24 both the material content and the porosity of the support 12 vary with distance.

It is presently considered preferable for the pores 26 to cover from about 10 to about 30 percent of the area of the surface 14 and for from about 70 to about 95 percent of the surface area of the surface 22 to be open. Thus the preferred support 12 used with the present invention may be described as an asymmetric layer, film or membrane from about 10 to about 30 percent of the area of which one surface is open and from about 70 to about 95 percent of the area of the other surface is open which gradually changes in porosity or density in accordance with the distance between these two surfaces.

The specific pores 26 on the surface 14 described should be sufficiently small so that there is no danger or chance of the layers 16 and 20 tending to collapse into or rupture adjacent to these pores during the use of the membrane 10. On the other hand if the pores 26 are undesirably small they will tend to impede flow through the support 12 merely as a result of their size. As a result of these considerations it is considered that when the layers 16 and 20 are of a preferred character as subsequently described that the holes or pores 26 in the surface 14 should be at least about 0.05 microns in diameter and should be no greater than about 0.5 microns in diameter. This maximum dimension is related to the characteristics and dimensions of the layers 16 and 20 and may be varied somewhat in accordance with the changes in these layers 16 and 20 permissible within the scope of the present invention. This minimum figure is based upon flow control considerations which are substantially unrelated to the character of the layers 16 and 20.

The thickness of a preferred support 12 in accordance with the present invention may also be varied between comparatively broad or wide limits. Regardless of whether or not the support 12 is asymmetric in character as indicated in the preceding discussion the support 12 must contain sufficient material so as to be capable of serving to physically support the layers 16 and 20 so that these layers will not be damaged during the use of the membrane 10 and during normal handling. The amounts of material required to attain a desired reinforcement may be easily determined through routine experimentation and will vary somewhat depending upon whether or not an auxiliary support (not shown) is to be used with the support 12 and depending upon the properties of the material within the support 12.

An integral asymmetric support 12 as indicated in the preceding is best formed of an appropriate relatively "stiff" polymer, preferably a polymer of a relatively rigid character having a glass transition temperature above about 130°C. so as to be sufficiently rigid in character to be resistant to collapsing or deforming. Such deformation of the support 12 would tend to close or block off the pores 26 when the membrane 10 is subjected to a pressure differential in use. It is considered that it is preferable for the support 12 to be at least 40 microns thick when it is to be utilized with an auxiliary support (not shown) capable of mechanically supporting the support 12 in a reasonable manner and that it is preferred for the support 12 to be at least 100 microns thick when it is to be utilized without being reinforced by such an auxiliary support. It is considered that there is a reasonable danger of the support 12 rupturing as a result of the presence of a fluid pressure differential during the use of the membrane 10 if the support 12 is any thinner than indicated. It is considered that normally the support 12 should not be any more than about 20 microns thicker than either of these values because if the support is any thicker than indicated it is apt to present an undesirable resistance to fluid flow.

It is presently considered preferable to form the support 12 from a conventional or known polysulfone or a polyamide polymer although other polymers can be used. Such polymers are relatively rigid and stiff and may be easily formed into supports corresponding to the preferred support 12 described in the preceding. Further, such materials can be reacted so as to be cross-linked with the hydrogel layer 16 as hereinafter described.

An understanding of the hydrogel layer 16 must be predicated upon an understanding of the word or expression "hydrogel". From the components of this word it is obvious that it refers to a water based gel or gel system. Such a gel or gel system can be based upon an inorganic material such as alumina or silica. More commonly the term "hydrogel" is used to designate gels based upon water swollen random coils of polymer chains which are water loving in the sense that they tend to take up water so that some water is "bound" in the polymer coils and so that there is some "free" or unbound water between the swollen polymer chains.

On occasion the polymers which are utilized to form such hydrogels are referred to as hydrocolloids or hydrocolloid-like polymers. Polyacrylic polymers, diaminobutane polymers and compounds such as alginic acid, guar gum and the like are commonly referred to as such hydrocolloids or hydrocolloid-like polymers. It is preferred to utilize with the present invention in creating a layer 16 at least one hydrocolloid forming compound or polymer which is "lightly" cross-linked so as to improve its mechanical stability. Since compounds such as alginic acid which are cross-linked utilizing ionic bonds are relatively sensitive to minor changes in pH in the sense that a comparatively minor change in pH will normally cause a resultant change in the physical properties of the hydrogel of such a compound it is preferred to utilize with the present invention polymers and compounds which are cross-linked to a limited extent utilizing covalent linkages.

The molecular weight of a polymer or compound used to form a hydrogel utilized in the layer 16 is considered to be important. If the polymer chains are too large the viscosity of a solution containing such polymer chains becomes so great as to make it difficult to utilize this solution in manufacturing the layer 16. Also if these chains are undesirably large a process of manufacturing the layer 16 is considered to be unnecessarily complicated as a result of shear degradation. On the other hand, if the molecular weights of these chains are too low the pores 26 of a support 12 will tend to be penetrated by or clogged with the hydrogel layer 16 to an undesired extent sufficient to detrimentally affect fluid flow through the pores 26 as a result of the formation of the layer 16 upon the layer 12.

As a result of these considerations it is considered that although polymers or compounds having a molecular weight of from about 30,000 to about 5,000,000 can be utilized in creating a useful hydrogel layer 16 it is preferable to produce this hydrogel layer 16 utilizing a polymer or compound having a molecular weight of from about 500,000 to about 3,000,000. If desired several of such polymers or compounds can be used in a hydrogel layer 16. The hydrogel layer 16 may be created utilizing at least one polymer which contains vinyl groups since such polymers may be easily cross-linked through the formation of covalent links as a hydrogel is formed and since such polymers form gels or gel systems which are effective in conveying or conducting water. Alternate polymers containing hydroxyl groups which can be cross-linked by ester groups or containing carboxylic acid groups to form amide cross-links may be used.

This hydrogel layer 16 is quite important to the present invention. As indicated in the preceding discussion it has two functions: it physically holds or supports the layer 20 at or along the surface 18 and it serves to distribute water flow from the layer 20 to the pores 26 of the support 12. In order for this layer 16 to adequately serve its purpose of distributing water it must be of such a character that the hydrogel system within this layer 16 will not be significantly affected by any temperature changes normally encountered in shipping and handling of a completed membrane 10. Further, this layer 12 should be of such a character as to be capable of conveying or transporting water effectively at any normally encountered water temperature. For the layer 16 to be satisfactory in these regards it is believed that it preferably should consist essentially of a thermally irreversible gel system.

This distributive function of the hydrogel layer 16 can best be explained by indicating what would happen if the layer 20 was located directly against the surface 14 of the support 12. If this were the case those portions of the layer 20 directly adjacent to the pores 26 would receive fluid from the layer 20 while those portions of the layer 20 in contact with the surface 14 between the pores 26 would be blocked off by the material at the surface 14 so as to be unavailable for reverse osmosis purposes.

The hydrogel layer 16 prevents this blocking effect because of the ability of a hydrogel to transmit or convey water. The hydrogel layer 16 is used with the present invention to conduct water from all portions of the layer 20 in contact with the surface 18 to the various pores 26 in the surface 14. Thus this hydrogel layer 16 avoids what may be referred to as "dead spots" along the surface 18. For the hydrogel layer 16 to be effective in this utilization it must be sufficiently thick to be capable of satisfactorily distributing or conducting fluid from the layer 20 to the various pores 26. It must also be sufficiently thick so as to be continuous or non-porous in character so as to completely support the layer 20. On the other hand this layer 16 should be sufficiently thin so as not to provide any significant or excessive resistance to liquid flow from the layer 20 to the support 12 other than such resistance as is inherently necessary in distributing liquid from all portions of the surface 18 to the various pores 26. Preferably from this point of view this layer 16 should be about as thick as the average distance between the pores 26.

As a result of these considerations it is considered that it is possible for the layer 16 to have a dry thickness of from about 0.1 to about 5 microns. If this layer 16 is thinner than this there is some danger that it will be of a discontinuous character and it probably will not be thick enough to adequately transport and convey water. If on the other hand this layer 16 is any thicker than the value noted more hydrogel will be present than is needed to perform the functions indicated in the preceding, and as a result the excess hydrogel will tend to interfere with water flow. It is considered the preferred results are achieved when this hydrogel layer 16 has a dry thickness of from about 2 to about 3 microns since a hydrogel layer within this range adequately performs its intended functions as indicated in the preceding discussion and will normally be free from any defects such as discontinuities.

Since the polymer chains in any hydrogel as indicated in the preceding will swell in the presence of water or water and another appropriate solvent the "wet" thickness of the hydrogel layer 16 will be greater than dry thickness dimensions as indicated in the preceding. This is important to note since on occasion the reverse osmosis membrane 10 of the present invention will be supplied with its hydrogel layer 16 depleted of liquid content or at least substantially depleted of its liquid content.

The amount of such swelling will be dependent upon the specific polymer used in creating the hydrogel layer 16. It is considered that the polymer in a hydrogel employed in the layer 16 must be capable of taking up at least an amount of water equal to at least 150 percent of the weight of the polymer present when the layer 16 is at a normal, ambient pressure and temperature if the hydrogel is to be able to convey water at a desirable rate. Preferably the amount of water within the layer 16 will be at least 15 times the weight of the polymer present under the noted conditions for the water to have a desired degree of mobility within this layer 16. If the layer 16 contains an amount of water in excess of about 200 times the weight of the polymer under the noted conditions the hydrogel layer 16 will not normally possess the physical properties necessary for it to perform its functions as indicated in the preceding.

There are several other considerations which are important in connection with the hydrogel layer 16. Preferably the polymer chosen for use in the formation of the hydrogel should be of such a character that the hydrogel used is not significantly affected by pressures such as will normally be encountered during the use of a membrane such as the membrane 10. Preferably the gel type structure formed will not be broken down or damaged at pressures such as are noted.

Unquestionably the pressure applied to a membrane 10 during the use of this membrane 10 will to a degree affect the layer 16 in this membrane. In general the greater the pressure applied to the membrane 10 the greater the extent to which the hydrogel layer 16 will tend to be compacted. The more this layer 16 is compacted the greater the resistance of this layer 16 to water flow through it and the greater the chance that some minor amount of water may be expressed from this layer 16.

It is of course obvious that the active layer 20 is critical to the operation of the reverse osmosis membrane 10 because it is this layer which normally completely performs the actual separation achieved in any reverse osmosis procedure. In order to achieve this separation with water the layer 20 must be hydrophilic in character so as to be capable of dissolving the water so as to segregate the dissolved water from other materials in the solution being purified which will not go into solution to any signfiicant extent in the polymer in the active layer 20.

From the point of view of water movement in general the greater the degree of water absorption by the layer 20 the better since the greater the degree of absorption of water by the layer 20 the easier it is for water to move through this layer and, hence, the greater the flow which can be achieved through the complete membrane 10. However, there is a limit to this. Salt penetration into the layer 20 tends to increase with increases in water absorption. If the layer 20 tends to absorb beyond about 20 percent by weight of water on the basis of its own weight the layer 20 will tend not to be as selective as normally desired in achieving a purification action. If an amount of water less than about 2 percent by weight of the dry or non-water containing polymer is absorbed by this layer 20 during the use of the complete membrane 10 flow through this membrane 10 is so limited as to make the membrane 10 unsuitable for most normal utilization. Presently preferred results are achieved when this membrane will absorb from about 5 to about 15 percent by weight of water on the basis of its own dry weight.

-17-

The ability of the layer 20 to absorb water should be considered in connection with another factor. The thicker this layer 20 the more "difficult" it is for this layer 20 to conduct or transmit comparatively high quantities of water when the membrane is used. On the other hand, if this layer 20 is undesirably thin there is a limited danger that it will contain surface discontinuities or imperfections and that it will not have a smooth, continuous, uniform character desirable in obtaining a consistent "purification" of water during the use of the membrane 10. As a result of these considerations it is considered that a useful membrane 10 can be manufactured with the layer 20 ranging in thickness from about 50$^{\circ}$A to about 1500$^{\circ}$A. It is considered however, that preferred results are achieved when the thickness of this layer 20 is from about 200$^{\circ}$A to about 500$^{\circ}$A.

A factor which is important in connection with the layer 20 concerns the prior treatment or lack of prior treatment of water to be purified utilizing a membrane 10. Unless such water has been previously treated to kill any and all microorganisms present within it, such water will normally contain at least some such microorganisms. Hence, the use of such water with the membrane 10 will result in the layer 20 being exposed to those microorganisms present in such water. Since polymers of a hydrophilic, water dissolving character as used in the prior art normally tend to either be susceptible to attack as a result of the growth of microorganisms on such polymers or to clogging as a result of microorganisms growing on the surface of such polymers it is disadvantageous to use a membrane such as the membrane 10 with water which has not been treated to kill microorganisms present within such water.

Although it is of course possible to treat water in many different ways in order to kill microorganisms as a practical matter there is only one way which is normally economic for killing microorganisms in water. This involves the treatment of water with an oxidizing agent having a sufficient oxidation potential to serve as a sterilizing agent so as to sterilize water. Chlorine is the most common agent utilized for this purpose; ozone and to lesser extents various other agents such as iodine and various chlorine containing compounds are utilized in sterilizing water. Because of the use of such oxidizing or sterilizing agents it is considered highly preferable that the polymer utilized in the layer 20 be substantially inert in the presence of an oxidizing agent having a sufficient oxidation potential to serve as a sterilizing agent in sterilizing water.

Another factor which is important with the layer 20 concerns what can be considered as a different type of inertness. Because of the fact that water from many different sources will also contain various enzymes such as cellulase which will not be affected or will not be significantly affected by oxidation treatments such as are normally utilized to kill various microorganisms it is also considered highly preferable that the polymer utilized in the layer 20 also be substantially inert in the presence of any enzyme which may be reasonably expected to be found within the water.

Normally only the layer 20 need possess such inertness to an oxidizing agent and to various enzymes as indicated in the preceding discussion. During the use of a membrane 10 the layer 20 will serve essentially as a barrier tending to isolate both the material in the hydrogel layer 16 and the material in the support 12 from any oxidizing agent and any enzyme present within the water treated with the membrane 10. Even if some of the oxidizing agent or some enzyme within the water being treated should contact the layer 16 or the support 12, the chance of such contact causing any significant damage tending to detrimentally affect the operation of the membrane 10 to any significant extent is quite limited. Even if the layer 16 or the support 12 should become damaged to a degree as a result of contact with such an oxidizing agent or an enzyme as noted, this will not normally affect the operation of the membrane 10 because it is the layer 20 which accomplishes the salt separation desired from the use of this membrane.

Comparatively few organic polymers possess a degree of stability and a hydrophilic character as indicated in the preceding and in addition are of such a character that they are capable of being applied to the layer 16 in creating the layer 18 without causing damage to the layer 16. It is considered preferable to utilize an epoxy, phenolic, partially hydrolyzed polyvinyl ester polymer or polymer system in forming the layer 20 because in general such polymers are adequately resistant to oxidation and to enzyme attack, are sufficiently hydrophilic in character to be useful in separating water, and can be applied to the layer 16 without damaging this layer 16 as the membrane 10 is manufactured. However, it is noted that not all polymers of these two classes are useful for the layer 20.

In general a desired degree of inertness in layer 20 is the result of a precise structural formula of the polymer or polymer system used in creating the layer 20. In general the suitability of a particular polymer for the use in the layer 20 can be determined on the basis of routine testing in order to determine if such a polymer possesses the various desirable characteristics indicated in the preceding discussion. Epoxy, phenolic and partially hydrolyzed polyvinyl ester polymers are normally desirable for use in the present producing the layer 20 but may not be desirable dependent on whether or not they contain various reactive groups which are open to chemical attack by an oxidizing agent or which are open to chemical attack as the result of an action of an enzyme.

Generally speaking any useful polymer in the layer 20 should employ ester, vinyl or tertiary amide cross-links in the polymer. Generally speaking any useful polymer of the epoxy type should have exposed carboxylic acid groups. Generally speaking any epoxy, phenolic or partially hydrolyzed polyvinyl ester used should only contain hydroxyl groups which are spaced or remote from electron donor or electrophilic groups and any halogen or other hydroxyl groups present in the polymer chain.

Various epoxy resins as indicated in the preceding discussion can be formed by cross-linking pre-polymer chains having terminal hydroxyl groups with tetrafunctional carboxylic acid and anhydrides to produce polymers containing ester cross-linkages and exposed carboxylic acid groups. Generally speaking phenolic polymers as indicated in the preceding discussion can be obtained by cross-linking

conventional commercially available resol and novolak or phenoxy resins with difunctional acid anhydrides such as maleic, phthalic and various similar difunctional anhydrides.

Various partially hydrolyzed polyvinyl esters as indicated in the preceding discussion can be produced by partially hydrolyzing polymers such as polyvinyl acetate or butyrate resins to a sufficient extent to have a desired degree of salt rejection as well as satisfactory ability to "transmit" water.

Generally speaking a polyvinyl ester which is from about 10 to about 50% hydrolyzed will be satisfactory. If such a polymer is hydrolyzed to a greater extent it will not normally exhibit a normally desired degree of salt rejection; if it is not hydrolyzed at least as much as indicated normally it will not exhibit a desired ability to absorb water. Whenever this expression "partially hydrolyzed polyvinyl ester" is used in this specification or in the appended claims, it is used to designate a polymer which has been hydrolyzed in an amount as noted.

Reverse osmosis membranes corresponding to the membrane 10 discussed in the preceding can be manufactured in a number of different, somewhat related manners. When such a membrane is to utilize a conventional or known support as the support 12 described in the preceding, the technique of manufacturing those membranes generally involves locating first the layer 16 upon the support 12 and then subsequently locating the layer 20 on this layer 16. Because the layers 16 and 20 are quite thin they cannot normally be separately manufactured and then layed down or deposited in place at a reasonable cost, but must be formed in situ. Thus, the layer 16 must be created upon the layer 12 and then in turn the layer 20 must be created upon the layer 16. By utilizing entropic segregation as hereinafter indicated these layers 16 and 20 can be concurrently produced.

In general these layers 16 and 20 can be created utilizing known or conventional techniques for creating comparatively thin continuous films or coatings. Thus, these layers 16 and 20 may be created by forming appropriate solvent solutions and then depositing these solutions by known or conventional roller, transfer, brush, wick or dip coating techniques. Any such deposition of a solution must of course be followed by solvent removal, either by air drying or by heating at a moderate temperature sufficiently low so as to avoid polymer damage and frequently sufficiently high so as to cause some cross-linking between polymer chains.

As a result of manufacturing or depositing the layer 16 upon the support 12 and the layer 20 upon the layer 16 in accordance with conventional techniques as noted for providing very thin polymer films there will be a degree of physical interlocking resulting from intimate physical contact at the surfaces 14 and 18 which will tend to hold the support 12 to the layer 16 and the layer 20 to the layer 16 to an adequate extent for most practical purposes. In some cases this physical type of holding action may not be adequate to prevent a degree of separation or movement between the support 12 and the layer 16 and between the layer 20 and the layer 16. For this reason it is considered preferable for the support 12, the layer 16 and the layer 20 to all be cross-linked so as to achieve a type of "chemical bond" at each of the surfaces 14 and 18. Such cross-linking can be achieved by utilizing appropriate polymers or polymer systems capable of interacting with one another to form cross-links as indicated.

In actuality the manufacture of membranes corresponding to the membrane 10 is preferably significantly more complex than is indicated by the preceding discussion. Previously it was indicated it is preferable for the support 12 to consist essentially of a polysulfone or polyimide polymer having a particular type of asymmetric physical structure. Such a support 12 can be manufactured by forming a solvent solution of the polymer used and then casting this solution onto an imporous transfer sheet such as, for example, a stainless steel belt to a desired thickness capable of resulting in the production of a support 12 of a particular desired thickness.

Thereafter, the exposed surface of the film located on the imporous sheet produced can be quenched in water--preferably deionized or distilled water--for a limited period at a temperature within a normal ambient temperature range. The support can then be removed from the transfer sheet. This results in the production of a support 12 having a desired or intended preferred physical structure as indicated in the preceding. Preferably the support 12 produced in this manner is washed several times with deionized or distilled water to remove any vestiges of the solvent employed in creating the polymer solution.

A support 12 produced in this manner may or may not contain reactive groups capable of cross-linking with the polymer or polymer system used in a hydrogel layer 16. When cross-linking between the support 12 and the hyrogel layer 16 is desired, the surface of a support produced as indicated can be treated so as to modify the polymer in order to place reactive groups on the surface of the polymer. One manner in which this can easily be accomplished with a polymer such as a polysulfone is to treat the surface of the polymer with a hydrogen peroxide solution under such conditions as to modify the surface of the polysulfone polyamide so that this surface holds sufficient hydroxyl groups to effectively cross-link to or with the subsequently created hydrogel layer 16. Other related treatments designed to accomplish the same type of objective can be used. Thus, the surface of a polysulfone support can be treated with a very dilute solution of chlorosulfonic acid for a brief period to produce the sulfonic acid groups capable of forming crosslinks.

The production of the hydrogel layer 16 is quite important since it is desired to form this layer 16 as indicated in the prior discussion without the hydrogel significantly penetrating or extending within the pores 26 in the surface 14 of the support 12. Preferably such penetration is substantially avoided or minimized in creating the layer 16 by applying an extremely dilute solution of a hydrogel forming polymer of a molecular weight as indicated in the preceding and then removing solvent under such conditions that there is minimal penetration of the solution within the pores 26. In general the higher the viscosity of the solution the less chance of such penetration.

By virtue of the fact that the hydrogel forming polymer within such a solution is swollen by the solvent or solvent system used to as great an extent as reasonably possible and by virtue of the fact that the solvent solution of the hydrogel polymer coils is quite dilute several important benefits are achieved. One of these is that the solution of the hydrogel polymer coils may be readily handled as a liquid so as to be applied by techniques as indicated in the preceding discussion. Another benefit is that the swollen polymer coils within the solution are sufficiently large so that the solution is sufficiently viscous so that it will not readily or easily penetrate the pores 26 within the surface 12 so as to tend to clog or block these pores. If desired it may be considered that the surface 14 of the support 12 acts more or less as a common filter in filtering solids out of a liquid by tending to hold back swollen polymer coils on the surface 14 so that such coils will constitute the layer 16 as solvent is removed.

If desired, the penetration of such solution into the pores 26 may be minimized to a degree through the use of a viscosity controlling agent which is sufficiently inert so as not to affect the operation of the layer 16 or which will be expelled from the layer 16 during the final stages of the formation of this layer so as to be removed during rinsing. Thus, for example, a common high molecular weight polyethylene glycol having wax-like characteristics may be used in the amount of 2 or 3 % by weight of the total weight of the polymer or polymer system in the hydrogel layer 16 so as to increase the viscosity of the hydrogel polymer solution. The use of such a viscosity controlling agent is considered preferable in aiding in the formation of a continuous hydrogel layer.

0056512

-26-

In general, if the molecular weight of the polymer coils in a hydrogel solution as indicated in the preceding is undesirably low there will be a tendency for a dilute solution as indicated not to form a continuous film when applied by conventional techniques as previously indicated. To a degree this tendency can be combatted through the use of a viscosity controlling agent as indicated. On the other hand in general the lower the molecular weight of the polymer coils in the hydrogel layer 16 the more this layer will tend to penetrate the pores 26 within the surface 14 of the support 12.

To a degree this tendency can be combatted through the use of a viscosity controlling agent as indicated. If the molecular weight of such hydrogel polymer coils is undesirably low there will be a tendency for such pores to fill up with or become clogged with the hydrogel layer 16 due to penetration of the hydrogel solution even when a viscosity controlling agent as indicated is employed. If desired the solvent or solvent system may contain very minor amounts of wetting agents which will tend to promote uniform spreading of the hydrogel forming solution.

Another factor which is important in connection with the manufacture of the hydrogel layer 16 relates to the solvent or solvent mixture used in creating this layer. It is important that the solvent or solvent system employed be of such a nature as to avoid any sort of "action" with respect to the support 12 used. Thus, for example, a solvent or solvent system is preferably used which will not significantly tend to swell any polymer within the support 12. If the solvent or solvent system tended to place the polymer in the support 12 in solution or to significantly swell this polymer, there is danger that the desired porosity within the support 12 would be detrimentally affected and this in turn would detrimentally affect the flow characteristics through the membrane 10.

As a practical matter this consideration dictates that when the support 12 is of a preferred polysolfone or polyimide polymer as indicated in the preceding that the solvent or solvent system consist of water or a mixture of water with a lower aliphatic alcohol ($C_1$ to $C_8$ inclusive) such as, for example, isopropyl alcohol. The water is, of course, required in order to form a hydrogel. Both it and the lower aliphatic alcohol can normally be removed from the layer 16 as this layer 16 is being created with a minimum amount of difficulty.

Thus, for example, a solution to be used in forming the hydrogel layer 16 can be formed by first forming a solution of the particular polymer or polymers to be used which preferably obtain at least two reactive sites capable of being used in the formation of covalent cross-links at each of their ends. Upon the cross-linking of such polymer in the solution by reasonable control of the factors tending to cause cross-linking a hydrogel forming polymer will be formed which has a desired stability against weakening of the solution by heat--i.e.is a thermally irreversible gel.

The presence of such reactive sites on the hydrogel polymers used is also beneficial in several other regards. Because of the dilution of the solution used to create the hydrogel layer 16, normally there will be adequate reactive sites on the hydrogel polymers deposited on a support 12 for two different types of cross-linking to occur. When the support 12 is of such a character as to have reactive sites as indicated in the preceding discussion during the normal conditions of deposition and solvent removal in creating the hydrogel layer 16 reactive sites on the hydrogel polymer material will normally tend to be used in the formation of covalent bonds with the support 12.

Further, there will be some tendency for additional cross-linking between the polymer coils of the hydrogel material as the layer 16 is being created and as solvent is being removed from it. This is considered to be desirable because it tends to increase the physical strength of the hydrogel layer 16. It is considered, however, that it is preferable to select the hydrogel forming polymer or polymers used so that not all functional sites capable of cross-linking are reacted prior to the creation of the final active layer 20.

The procedure in forming the active layer 20 is somewhat simpler than the procedure involved in forming either the support 12 or the layer 16 since this layer 20 is a continuous, substantially uniform, imporous layer located upon the layer 16. As a result of this there is no need to be concerned about the development of a particular porous structure or to be concerned with the filling of pores as the layer 20 is created. The procedure normally followed in forming the layer 20 reasonably corresponds to the procedure previously described in connection with the creation of a layer 16. This procedure involves the steps of forming a solution, depositing the solution and then removing the solvent from the solution as well as other details as hereinafter indicated.

One important consideration in the formation of the layer 20 involves the nature of the solvent or solvent system utilized. In order to prevent and/or minimize the chances of damage to either the layer 16 or the support 12 it is preferred to utilize a solvent or solvent system as previously described in connection with the creation of the layer 16 which consists of water, a lower aliphatic alcohol ($C_1$ to $C_8$ inclusive), or a mixture of the two. Because such a solvent or solvent system is the same as that used in creation of the hydrogel layer 16 there is substantially no chance of damage to the hydrogel layer 16 as a result of the use of this solvent or solvent system.

It will be recalled that this solvent or solvent system was in part utilized in connection with the layer 16 because it will not tend to place a preferred polymer used in forming the support 12 in solution and will not tend to swell or significantly swell such preferred polymer. If the base layer or support 12 is resistant to certain organic solvents these may be used in creating the layer 20 provided they do not damage the layer 16. For example, chloroform may be used if the support is made of a polyester or polyamide.

There is, however, a problem in association with the use of any such solvent or solvent system. The polymers preferred capable of being used to form a layer 20 of the desired properties tend to be relatively difficult to dissolve in a solvent or solvent system as indicated in the preceding discussion.

This is particularly the case when the molecular weights of such polymers are as high as is normally desired in connection with the layer 20 and when such polymers are epoxy or phenolic polymers as previously discussed.

Because of this normally the solvent solution used to create a layer 20 consisting of an epoxy or phenolic polymer will contain so-called prepolymer chains of comparatively low molecular weight which have to be further reacted with one another in order to form an active layer 20 having the ultimate physical properties.

When it is desired to utilize an epoxy layer 20 the solvent solution employed will, because of the solubility problem noted, normally contain prepolymer chains having terminal hydroxyl groups which are sufficiently short so as to easily go into solution in the solvent or solvent system employed and tetrafunctional carboxylic acid anhydrides of a similar solubility. As previously indicated, for a phenolic layer 20 such chains may be novolak or phenoxy resins. In creating a final polymer layer 20 of a phenolic resin it is normally considered necessary to incorporate within the solvent solution used a comparatively small, effective amount of a hardener and/or a catalyst in accordance with conventional practice. These materials are necessary in promoting the desired actions in creating the final active polymer within a comparatively limited time period at a comparatively moderate temperature.

Suitable curing agents or hardeners are various divalent acids and divalent acid anhydrides such as those of maleic, phthalic and various other similar acids as are conventionally used for this purpose. Conventional catalysts such as boron trifluoride, various quaternary phosphonium alkyl or aryl compounds, benzoyltrimethylammonium iodide, zinc stearate, N,N-diethanolamine and the like can be conveniently utilized. Generally speaking it is preferable to utilize amounts of a curing agent and a catalyst which are effective to accomplish the formation of the desired hydrophilic polymer under such conditions that no damage is apt to occur to either the support 12 or the layer 16 as a result of undue heating or the like. The curing agents, the catalyst, and indeed the prepolymer chains used to form a phenolic layer 20 must, of course, be selected with reference to their solubility in the particular solvent or solvent system employed with them.

The relative dilution of any solvent solution to create an epoxy or phenolic layer 20 is considered to be important. The solution used is preferably sufficiently dilute so that there is substantially no chance of the prepolymer chains present in the solution reacting until the solvent content of the solution is reduced as, for example, by evaporation during drying of the solution after it is applied to a layer 16. The precise amount of a solvent or solvent mixture required to accomplish the objective will be dependent upon a number of factors and is best determined by routine experimentation. Because of this such an amount is preferably defined as an amount which is effective as indicated. An excess over the amount is preferably employed so as to avoid any possibility of an undesired reaction.

An interesting facet of the present invention relates to the fact that it is possible to produce a membrane 10 having a separate hydrogel layer 16 and a separate active layer 20 concurrent by making use of entropic segregation as briefly indicated in the preceding discussion. In concurrently producing two such layers 16 and 20 a solution is prepared utilizing a solvent or a solvent system such as is used in connection with the separate preparation of either of these layers. This solution should contain both swollen hydrogel polymer coils and various specific "ingredients" as identified in the preceding for the production of the active polymer layer 20.. Such a solution should be applied to an appropriate support such as the support 12 and then heated at a moderate temperature sufficient to volatilize the solvent present and to cause appropriate reactions leading to the formation of the active layer 20 and the hydrogel layer 16. Such heating conditions should normally be sufficiently effective to cause any cross-linking possible permissible between functional groups of the polymer forming ingredients present. The solution utilized should be applied to the support 12 in any conventional manner as indicated in the preceding.

As such a composite mixed solution is heated as indicated in the preceding, what is referred to as entropic segregation will take place in a significant extent. To a degree such segregation may be promoted by precise control of the heating employed to remove the solvent present and to cause reaction from the ingredients from within the solution applied to create the two layers 16 and 20. These layers 16 and 20 as produced in this manner will not be as separate and distinct as the layers 16 and 20 separately produced as indicated in the preceding discussion and to a significant extent will be physically intermixed to a sufficient degree so that they cannot be readily or normally separated. Such layers 16 and 20 produced in this manner will not normally provide as good a separation as desired in purifying water as, for example, by removing salt from water and in an appropriate reverse osmosis apparatus. However, layers 16 and 20 produced as described are sufficiently effective in removing salt so as to provide water which is sufficiently salt free to be useful in many different non-critical applications where extreme water purity is not required.

Because of the nature of the reverse osmosis membranes of the present invention and the manners by which these membranes may be manufactured and because of the completeness of the preceding discussion it is not considered that so-called specific examples are necessary for an understanding of the present invention. However, in order to avoid any question as to this point the following specific examples are given solely as an aid to a furtherance of an understanding of the inventive subject matter set forth in this specification.

These examples are not to be considered as limiting the invention in any respect. Indeed, no effort is being made to provide specific examples specifically indicating each and every numerical value set forth in the preceding which is considered to be important relative to membranes of the present invention.

While these various numerical values are important as indicated in the preceding discussion they are not of such a character as to delineate the exceedingly critical or "sharp" transition such as, for example, a transition in a physical property which amounts to a complete change in this physical property. All of the various numerical values indicated in the preceding may be considered as setting forth a limitation which is important or significant in connection with a continuous variable.

Example 1:

A support corresponding to a preferred support 12 as indicated in the preceding discussion can be prepared by first preparing a solution of 11 parts by weight polyarylsulfone in 14 parts by weight methyl-butanol and 75 parts by weight dimethylformamide. While being held at 30°C. this solution can be cast onto an inert, imporous transfer sheet such as, for example, a flexible belt coated with a polyethylene surface coating at a normal ambient temperature of about 20°C. to a wet thickness of about 400 microns. The film produced in this manner should therafter be quenched in water, preferably deionized or distilled water, at a normal ambient temperature of about 20°C. for a period of about three minutes. Thereafter, the support produced as a result of these steps is preferably washed several times in deionized or distilled water and then dried in air at about 160°C. for a period of two minutes.

Next, a previously prepared solution of 1 part by weight polyacrylic acid polymer having an average molecular weight of about 1,000,000 in 99 parts by weight deionized or distilled water at an ambient temperature 20°C. can be coated on the surface of the support remote from the transfer sheet in a thickness as determined by experimentation to be adequate to form a hydrogel layer after treatment as

0056512

subsequently indicated of a thickness of about two
microns. As soon as the polyacrylic acid solution is
supplied to the surface of the support, the support
including the wet film can be oven dried in a forced
air oven at about 140°C. for a period of about two
minutes. This drying results in the production of a
hydrogel layer corresponding to the layer 16 previously described.

An active layer corresponding to the active
layer 20 can then be created by first locating a
previously prepared solvent solution of 0.4 parts by
weight epoxy resin having average molecular weight
of about 20,000 (Araldite 488) 0.1 parts by weight
prepolymer of phenol-formaldyhyde, water borne phenolic hardener, 0.001 part by weight boron tri-fluoro-
ethanate catalyst, 49.2 parts by weight water, and
50.0 parts by weight methyl alcohol at a normal
ambient temperature of 20°C. on the hydrogel layer
indicated in the preceding. An excess of this
solution over the amount which will automatically
adhere to the hydrogel layer as a result of surface
tension can be applied to the hydrogel layer. The
coated composite sheet can then be held vertically
for only the time required for this latter coating to
drain so as to establish its own surface thickness.
As soon as this occurs the composite including the
solution can be baked in air at 120°C. for five
minutes to remove solvent and to cure the active
film. After this the completed membrane can be
removed from the transfer sheet.

Example 2:

The procedure indicated in the preceding Example
1 can be followed substituting for the inert, imporous transfer sheet specified a continuous sheet of paper such as paper sold under the trademark "PELLON 6800".

Example 3:

The procedure indicated in the preceding Example 1 can be varied so as to remove the transfer sheet from the support immediately following the air drying of the film which is converted into the support. Thus, with this procedure the support will not be reinforced as a hydrocolloid layer and an active layer are produced on it.

Example 4:

The procedure indicated in the preceding Example 1 can be varied in connection with the production of the active layer. In such variation a solution containing one part by weight of an A-stage or resol, one-step, thermosetting phenol-formaldehyde type resin consisting primarily of partially condensed phenol alcohols in 99 parts by weight water at room temperature can be titrated to a pH of about 7 utilizing a 0.1N solution of sodium hydroxide. This solution can be applied to the hydrogel layer instead of the solution used to produce the active layer in Example 1 as indicated in connection with Example 1. After draining as specified in Example 1 it can then be air dried at 100°C. for a period of 10 minutes to produce the final membrane. This membrane can then be removed from the transfer sheet as noted in Example 1.

Example 5:

The procedure set forth in Example 1 can be followed in the production of a support as indicated in this Example 1. Thereafter, both a hydrogel layer and an active layer corresponding to the layers 16 and 20 previously described can be created by using a solution consisting of 1.8 parts by weight of acrylic acid polymer as specified in Example 1, 0.2 parts by weight of an epoxy resin having an average molecular weight of about 25,000 (Araldite 6010) in 98 parts by weight of ethanol. This solution is preferably filtered and then allowed to stand at room temperature for a period of one hour.

Thereafter, it can be applied to the exposed surface of the support specified in Example 1 utilizing a polyurethane foam coating wick so as to produce a layer of the solution of a sufficient thickness so that after the subsequent steps a hydrocolloid layer of about 2 1/2 microns dry thickness and an active layer of from about $350^{\circ}$A. will result. Thereafter, the transfer sheet and the support holding the applied solution can be heated in an oven in air at about $120^{\circ}$C. for a period of about 10 minutes. This will remove the solvent present and will result in entropic segregation to a sufficient extent so that the hydrocolloid layer and the active layer produced will be reasonably separate and distinct from one another, although to an extent there will be an intermingling of these layers at the interface between them.

-38-

## Example 6:

The procedure set forth in Example 1 can be varied by adding to this procedure an additional step. This step concerns the treatment of the dry support prior to the application of the polyacrylic acid solution. The step involves the treatment of the exposed surface of the support with a solution containing 30 parts by weight hydrogen peroxide, 0.02 parts by weight of a conventional surfactant (FSN) and 69.98 parts by weight water to which there has been added an amount of ferrous sulfate sufficient so that the solution contains 5 parts per million by weight of ferrous sulfate. This solution can be applied to the surface of the support at a temperature of 85°C. and is held in contact with this surface for a period of 10 minutes. Thereafter, the treated support as produced by this step can be washed several times in deionized or distilled water and then air dried at 120°C. for a period of five minutes. The support treated in this manner will possess hydroxyl groups which will react with the polyacrylic acid during the subsequent step of Example 1 so as to form covalent cross-links.

## Example 7:

The procedure set forth in Example 1 can be varied by adding to this procedure an additional step reasonably corresponding to the additional step set forth in Example 6. This additional step again concerns the treatment of the dry support prior to the application of the polyacrylic acid solution. This step involves the treatment of the exposed surface of the support with a solution containing 0.1 parts by weight of chlorosulfonic acid in 99.9 parts by weight of hexane at room temperature for a period of about 20 seconds. Normally a reaction will be indicated by the formation of hydrogen chloride gas. This reaction will produce sulfonic acid groups on the support which will cross-link with polyalkyl-
added
amine (Dow, Tydex 12) ⁄(during the subsequent step of Example 1 so as to form covalent cross-links. The chlorosulfonic acid used is preferably washed from the surface of the support with deionized or distilled water prior to this surface of the support being contacted with the polyacrylic acid solution.

## Example 8:

The procedure indicated in the preceding Example 1 can be varied by utilizing a solution of a polyacrylic acid derivative polymer or prepolymer segments having molecular weight of about 500,000 and having two vinyl groups attached to the of each polymer chain instead of the polyacrylic polymer specified in Example 1. All other details are as specified in Example 1. Such solution can be used instead of the polyacrylic acid polymer solution specified in any of the Examples indicated in the preceding discussion except Example 5. During the drying of this polyacrylic acid solution the polymer chains will connect up with one another to a limited extent by the addition of a 0.01% by weight potassium persulfate aqueous solution.

## Example 9:

The procedure indicated in the preceding Example 1 can be varied so as to produce a membrane using a different active layer than is specified in Example

1. This alternate active layer can employ a hydrolyzed polyvinylacetate polymer which can be prepared by: (1) treating a commercial polyvinylacetate with a solution of 10 parts by weight sodium hydroxide in 90 parts by weight water at ambient temperature until about 50% of the polymer is hydrolyzed; precipitating the hydrolyzed polymer from the solution with ethanol; (3) separating this polymer by filtration; (4) neutralizing the separated polymer with hydrochloric acid; and (5) then washing and drying the polymer. This polymer can be used by forming a solution containing 0.5 parts by weight of it in 99.5 parts by weight acetone and 0.025 parts by weight pyromelliticanhydride. Promptly after being formed such a solution can be spread on a hydrogel layer as specified in Example 1 to a thickness which will produce an active layer of a desired thickness after drying and then allowed to air dry. After this the final membrane can be produced by heating in air at 120°C. for 10 minutes.

This specification contains subject matter which is common to subject matter set forth in the U.S.A. Patent Application Serial No. 130,566 filed March 14, 1980 by the inventor named herein entitled "IMPROVED ANISOTROPIC MEMBRANES AND PROCESS THEREFOR". The entire disclosure of this application is incorporated herein by reference.

I CLAIM:

1. A reverse osmosis membrane including an active layer and a physical support for the active layer in which the improvement comprises:

the active layer consisting essentially of a continuous, non-porous, uniform film of an organic, film-forming polymer which is substantially inert in the presence of an oxidizing agent having a sufficient oxidizing potential to serve as a sterilizing agent,

said film being from about 50 to about 1500°A thick and being capable of dissolving an amount of water equal to at least two percent by weight of the weight of the film.

2. A membrane as claimed in claim 1 wherein:

said membrane includes a continuous, non-porous layer of an irreversible hydrogel composition containing at least one hydrogel-forming polymer and water, said hydrogel layer being located between said support and said active layer.

3. A membrane as claimed in claim 2 wherein:

said hydrogel layer is from about 0.1 to about 5 microns thick when dry,

said hydrogel forming polymer is capable of absorbing an amount of water equal to at least 150 percent of its own weight,

said polymer in said hydrogel layer being present in the form of swollen polymer coils of polymer chains of a molecular weight of from about 30,000 to about 5,000,000.

4. A membrane as claimed in claim 2 wherein:

said hydrogel layer is from about 2 to about 3 microns thick when dry,

said polymer in said hydrogel layer is capable of absorbing an amount of water equal to at least 15 times the weight of said hydrogel forming polymer and is incapable of absorbing an amount of water in excess of about 200 times of its own weight,

said hydrogel forming polymer in said hydrogel layer is present in the form of swollen polymer coils of polymer chains of the molecular weight of from about 500,000 to about 3,000,000.

5. A membrane as claimed in claim 1 wherein:
said film-forming polymer is a polymer selected from the group consisting of hydrophilic, partially hydrolyzed polyvinyl ester, epoxy and phenolic polymers.

6. A membrane as claimed in claim 5 wherein:
said film-forming polymer is capable of dissolving an amount of water equal to from about 2 to about 20 percent of its own weight, and said film is from about 50°A to about 1500°A thick.

7. A membrane as claimed in claim 5 wherein:
said film-forming polymer is capable of dissolving an amount of water equal to from about 5 to about 15 percent of its own weight, and
said film is from about 200°A to about 500°A thick.

8. A membrane as claimed in claim 1 wherein:
said membrane includes a continuous, non-porous layer of a thermally irreversible hydrogel composition containing at least one hydrogel-forming polymer and water, said hydrogel layer being located between said support and said active layer,

said film-forming polymer is a polymer selected from the group consisting of hydrophilic epoxy and phenolic polymers.

9.  A membrane as claimed in claim 8 wherein:

said hydrogel layer is from about 0.1 to about 5 microns thick,

said hydrogel forming polymer is capable of absorbing an amount of water equal to at least 150 percent of its own weight,

said polymer in said hydrogel layer being present in the form of swollen polymer coils of polymer chains of a molecular weight of from about 30,000 to about 5,000,000,

said film-forming polymer is capable of dissolving an amount of water equal to from about 2 to about 20 percent of its own weight, and said film is from about 50°A to about 1500°A thick.

10.  A membrane as claimed in claim 8 wherein:

said hydrogel layer is from about 1.5 to about 5 microns thick,

said polymer in said hydrogel layer is capable of absorbing an amount of water equal to at least 15 times the weight of said hydrogel forming polymer and is incapable of absorbing an amount of water in excess of about 200 times of its own weight,

said hydrogel forming polymer in said hydrogel layer is present in the form of swollen polymer coils of polymer chains of the molecular weight of from about 500,000 to about 3,000,000,

said film-forming polymer is capable of dissolving an amount of water equal to from about 5 to about 15 percent of its own weight,

said film is from about 200°A to about 500°A thick.

11. A membrane as claimed in claims 2 or 5 wherein:

said support is a porous asymmetric member having a porous surface in contact with said hydrogel layer, the porosity of said asymmetric member increasing in accordance with the distance away from said hydrogel layer.

12. A membrane as claimed in claim 11 wherein: from about 10 to about 30 percent of the surface of said support in contact with said hydrogel layer is open and from about 70 to about 95 percent of the surface of said support remote from said hydrogel layer is open.

13. A membrane as claimed in claim 11 wherein: the pores within said porous surface in contact with said hydrogel layer are at least about 0.05 microns in diameter and are no greater than about 0.5 microns in diameter, said pores in said surface in contact with said hydrogel layer being substantially free from material from within said hydrogel layer.

14. A membrane as claimed in claim 11 wherein: said support is formed of a polymer having a glass transition temperature above about $130^{\circ}C$ and is from about 40 to about 120 microns thick.

15. A membrane as claimed in claim 1 wherein: said membrane includes a continuous, non-porous layer of a thermally irreversible hydrogel composition containing at least one hydrogel-forming polymer and water, said hydrogel layer being located between said support and said active layer, said hydrogel layer is from about 0.1 to about 5 microns thick when dry,

said hydrogel forming polymer is capable of absorbing an amount of water equal to at least 150 percent of its own weight,

said polymer in said hydrogel layer being present in the form of swollen polymer coils of polymer chains of a molecular weight of from about 30,000 to about 5,000,000,

said film-forming polymer is a polymer selected from the group consisting of hydrophilic, partially hydrolyzed polyvinyl ester, epoxy and phenolic polymers,

said film-forming polymer is capable of dissolving an amount of water equal to from about 2 to about 20 percent of its own weight,

said support is a porous asymmetric member having a porous surface in contact with said hydrogel layer, the porosity of said asymmetric member increasing in accordance with the distance away from said hydrogel layer,

from about 10 to about 30 percent of the surface of said support in contact with said hydrogel layer is open and from about 70 to about 95 percent of the surface of said support remote from said hydrogel layer is open,

the pores within said porous surface in contact with said hydrogel layer are at least about 0.05 microns in diameter and are no greater than about 0.5 microns in diameter,

said pores in said surface in contact with said hydrogel layer being substantially free from material from within said hydrogel layer.

16. A membrane as claimed in claim 1 wherein:

said membrane includes a continuous, non-porous layer of a thermally irreversible hydrogel composition containing at least one hydrogel-forming polymer and water, said hydrogel layer being located between said support and said active layer,

said hydrogel layer is from about 2 to about 3 microns thick when dry,

said polymer in said hydrogel layer is capable of absorbing an amount of water equal to at least 15 times the weight of said hydrogel-forming polymer and is incapable of absorbing an amount of water in excess of about 200 times of its own weight,

said hydrogel-forming polymer in said hydrogel layer is present in the form of swollen polymer coils of polymer chains of the molecular weight of from about 500,000 to about 3,000,000,

said film-forming polymer is a polymer selected from the group consisting of hydrophilic, partially hydrolyzed polyvinyl ester, epoxy and phenolic polymers,

said film-forming polymer is capable of dissolving an amount of water equal to from about 5 to about 15 percent of its own weight,

said film is from about $200^{\circ}$ to about $500^{\circ}A$ thick,

said support is a porous asymmetric member having a porous surface in contact with said hydrogel layer, the porosity of said asymmetric member increasing in accordance with the distance away from said hydrogel layer,

from about 10 to about 30 percent of the surface of said support in contact with said hydrogel layer is open and from about 90 to about 95 percent of the surface of said support remote from said hydrogel layer is open,

the pores within said porous surface in contact with said hydrogel layer are at least about 0.5 microns in diameter and are no greater than about 5 microns in diameter,

said pores in said surface in contact with said hydrogel layer being substantially free from material from within said hydrogel layer.

17. A membrane as claimed in claim 16 or 17 wherein:

said polymer coils are cross-linked within said hydrogel composition.

18. A membrane as claimed in claim 16 or 17 wherein:

said support is a polymer support,

said polymer coils are cross-linked to one another, to said support and to said active layer.

19. A membrane as claimed in claim 16 or 17 wherein:

said support is formed of a polymer having a glass transition temperature above about 130°C., is from about 40 to about 120 microns thick.

20. A membrane as claimed in claims 16 or 17 wherein:

said support is a polymer support,

said polymer coils are cross-linked to one another, to said support and to said active layer,

said support is formed of a polymer having a glass transition temperature above about 130°C., is from about 40 to about 120 microns thick.

21. A reverse osmosis membrane including an active layer and a physical support for said active layer in which the improvement comprises:

said membrane including a continuous, non-porous layer of an irreversible hydrogel composition containing at least one hydrogel-forming polymer and water, said hydrogel layer being located between said support and said active layer.

22. A reverse osmosis membrane as claimed in claim 21 wherein:

the active layer consisting essentially of a continuous, non-porous, uniform film of an organic, film-forming polymer which is substantially inert in the presence of an oxidizing agent having a sufficient oxidizing potential to serve as a sterilizing agent,

said film being from about 50°A to about 1500°A thick and being capable of dissolving an amount of water equal to at least two percent by weight of the weight of the film.

23. A reverse osmosis membrane as claimed in claim 21 wherein:

said film-forming polymer is a polymer selected from the group consisting of hydrophilic epoxy and phenolic polymers,

said film-forming polymer is capable of dissolving an amount of water equal to from about 2 to about 20 percent of its own weight, and said film is from about 50°A to about 1500°A thick.

24. A reverse osmosis membrane as claimed in claim 21 wherein:

said film-forming polymer is a polymer selected from the group consisting of hydrophilic, partially hydrolyzed polyvinyl esters, epoxy and phenolic polymers,

said film-forming polymer is capable of dissolving an amount of water equal to from about 5 to about 15 percent of its own weight, and

said film is from about 200°A to about 500°A thick.

25. A reverse osmosis membrane as claimed in claim 21, 22, 23 or 24 wherein:

said hydrogel layer is from about 0.1 to about 5 microns thick when dry,

said hydrogel forming polymer is capable of absorbing an amount of water equal to at least 150 percent of its own weight,

said polymer in said hydrogel layer being present in the form of swollen polymer coils of polymer chains of a molecular weight of from about 30,000 to about 5,000,000.

26. A reverse osmosis membrane as claimed in claims 21, 22, 23 or 24 wherein:

said hydrogel layer is from about 2 to about 3 microns thick when dry,

said polymer in said hydrogel layer is capable of absorbing an amount of water equal to at least 15 times the weight of said hydrogel forming polymer and is incapable of absorbing an amount of water in excess of about 200 times of its own weight,

said hydrogel forming polymer in said hydrogel layer is present in the form of swollen polymer coils of polymer chains of the molecular weight of from about 500,000 to about 3,000,000.

27. A process of producing a reverse osmosis membrane in which an active layer capable of dissolving water is located on a surface of a porous support in which the improvement comprises:

applying to said surface of said porous support a water containing solution of prepolymer chains capable of reacting so as to form an active layer,

thereafter concurrently reducing the solvent content of this solution and reacting said prepolymer chains so as to form said active layer,

the viscosity of said solution, the time and manner of said contact of said solution with said surface, and the rate and conditions of said solvent removal being such that said active layer is formed on said surface of said support without penetration of said active layer into the pores of said support to any extent sufficient to detrimentally affect the ability of water to flow through said support.

28. A process as claimed in claim 27 wherein:

said solution is sufficiently dilute so that there is substantially no chance of said prepolymer chains reacting until the solvent content of said solution is reduced.

29. A process as claimed in claim 27 wherein:

said polymer chains are capable of reacting to form a polymer selected from the group consisting of epoxy and phenolic polymers.

30. A process of producing a reverse osmosis membrane which comprises:

forming a porous, sheet-like support layer which is sufficiently porous so that water can pass through said support layer,

forming a continuous hydrogel layer upon a surface of said support layer in such a manner that the pores of said support layer are sufficiently free from the presence of material from within said hydrogel layer so that fluid flow through the pores of said support layer is not detrimentally affected by the presence of said material within said pores, and

forming a continuous active layer capable of dissolving water so as to segregate the dissolved water from other materials in the solution being purified on the surface of said hydrogel layer remote from said support layer.

31. A process as claimed in claim 30 wherein:

all of said layers are formed of polymer compositions, and

the formation of at least one of said layers includes the step of cross-linking said one of said layers with an adjacent layer during the formation of said one of said layers.

32. A process as claimed in claim 30 wherein:

said hydrogel layer and said active layer are concurrently formed by applying to a surface of said support layer a solution containing both swollen hydrogel polymer coils and materials necessary for the production of said active layer and then heating so as to volatilize the solvent from said solution and so as to concurrently produce said hydrogel and active layers by entropic separation.

**0056512**

European Patent Office

**EUROPEAN SEARCH REPORT**

Application number

EP 81 30 4608.3

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| X | US – A – 3 855 133 (K.G. ROEHSLER)<br>* claims 1, 5, 13, 19, 25; column 3, lines 3 to 9, 37 to 53 *<br>-- | 1-3,5,<br>6,8,9,<br>11,15,<br>17,18,<br>21-23,<br>27,30 | B 01 D 13/04<br>C 02 F 1/44 |
| A | US – A – 3 556 992 (A.A. MASSUCCO)<br>* claims 1, 6, 8; column 2, line 25 *<br>-- | 1,2,27 | |
| A | US – A – 4 039 440 (J.E. CADOTTE)<br>* claim 1 *<br>-- | 20 | TECHNICAL FIELDS SEARCHED (Int.Cl.3) |
| A | DE – C – 339 977 (G.A. KRAUSE)<br>* claim *<br>-- | 1,2 | B 01 D 13/04<br>C 02 F 1/44<br>C 08 J 5/22 |
| P,A | GB – A – 2 064 367 (TORAY INDUSTRIES)<br>* claims 1, 2, 19 *<br>---- | 1,2,27 | C 08 J 7/02 |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

The present search report has been drawn up for all claims

| Place of search | Date of completion of the search | Examiner |
|---|---|---|
| Berlin | 16-03-1982 | KÜHN |

EPO Form 1503.1   06.78